# EUROPÄISCHE PATENTSCHRIFT

(11) **EP 1 088 270 B1**
(45) Veröffentlichungstag und Bekanntmachung des Hinweises auf die Patenterteilung: **02.10.2002**
(21) Anmeldenummer: 99931190.5
(22) Anmeldetag: 25.06.1999
(51) Int. Cl.: G06F 11/00

(54) **VERFAHREN ZUR PRÜFUNG VON JAVA-BYTECODE-PROGRAMMEN AUF SICHERHEITSEIGENSCHAFTEN**
METHOD FOR CHECKING JAVA BYTE CODE PROGRAMMES FOR SECURITY CHARACTERISTICS
PROCEDE DE VERIFICATION DES CARACTERISTIQUES DE SECURITE DE PROGRAMMES CODE OBJET JAVA

(30) Priorität: 26.06.1998 DE 19830015
(43) Veröffentlichungstag der Anmeldung: 04.04.2001
(73) Patentinhaber: Deutsche Telekom AG, 53113 Bonn (DE)
(72) Erfinder: POSEGGA, Joachim, D-76646 Bruchsal (DE); VOGT, Harald, D-64289 Darmstadt (DE)
(86) Internationale Anmeldenummer: EP9904438
(87) Internationale Veröffentlichungsnummer: WO00000890

(56) Entgegenhaltungen:
- EP-A- 0 685 792

## Beschreibung

Die Erfindung betrifft ein Verfahren zur Prüfung von Java-Bytecode-Programmen auf Sicherheitseigenschaften nach dem Patentanspruch 1.

Java ist eine von Sun Microsystems entwickelte Programmiersprache, die in sog. Bytecode-Programme übersetzt wird. Obwohl ursprünglich für Java entworfen, eignet sich Bytecode auch als Zielsprache für andere Programmiersprachen, und es gibt bereits entsprechende Compiler (z. B. für Ada).
Das besondere Konzept von Java besteht darin, Programme im Netz abzulegen und von Netzteilnehmern abrufen zu lassen, um sie auf einem Gerät des Netzieilnehmers ablaufen zu lassen. Dies unterstützt z. B. die Konfiguration und Wartung von Geräten aus der Ferne, ist aber auch im Zusammenhang mit Smartcards interessant, deren Funktionalität sich auf diese Weise erweitern läßt. Bytecode-Programme haben folgende Eigenschaften, die für ihren Einsatzzweck bedeutend sind:
- Bytecode-Programme sind kompakt. Bytecode-Instruktionen bieten wesentlich mehr Funktionalität als z. B. Instruktionen von Maschinensprachen. Durch die Anlehnung an Java werden Konzepte wie Objektorientierung direkt unterstützt.
- Bytecode-Programme können effizient interpretiert werden. Dies verleiht solchen Programmen Unabhängigkeit von einer bestimmten Zielmaschine. Vorausgesetzt wird lediglich ein Interpreter (die sog. "Java virtual machine", JVM) auf der Zielmaschine, um beliebige Bytecode-Programme ausführen zu können. Dieser Interpreter kann selbst kompakt implementiert und in (fast) jedes Gerät integriert werden.

Die JVM interpretiert eine Eingabe in Form einer Folge von Zeichen als Bytecode-Programm. Die JVM nimmt dabei keine Prüfungen vor, ob es sich bei der Zeichenfolge tatsächlich um ein Bytecode-Programm handelt. Sie verarbeitet die Zeichen als Bytecode-Befehle, ohne eine genauere Prüfung auf ihre Korrektheit durchzuführen. Die JVM verzichtet auf eine Überprüfung des Bytecodes, da sonst die Ausführungsgeschwindigkeit erheblich leiden würde. Prinzipiell ist es also möglich, eine beliebige Folge von Zeichen als Bytecode-Programm interpretieren zu lassen. Dadurch wäre es auch möglich - bei genauerer Kenntniss der Implementierung der JVM - ihre Sicherheitsmechanismen zu umgehen und damit z. B auf dem ausführenden Rechner Daten auszuspähen. Ein sicheres Bytecode-Programm kann dagegen aufgrund des Sprachentwurfs und der JVM auf Daten und Ressourcen des Zielrechners nur zugreifen, indem es dafür Funktionen der JVM in Anspruch nimmt.

Um zu verhindern, daß Zeichenfolgen verarbeitet werden, die keine zulässigen (sicheren) Bytecode-Programme darstellen, ist der JVM ein Prozeß vorgeschaltet, der eine Zeichenfolge auf Konformität zu gewissen Anforderungen überprüft, die sog. Bytecode-Verifikation. Diese Anforderungen garantieren, daß eine Zeichenfolge ein sicheres Bytecode-Programm darstellt. Da diese Überprüfung nur einmal vorgenommen werden muß, entstehen zur Laufzeit keine Nachteile bzgl, der Ausführungsgeschwindigkeit.
Der Prozeß der Bytecode-Verifikation prüft eine Folge von Zeichen daraufhin, ob sie ein zulässiges Bytecode-Programm darstellt und damit ohne Gefahr für die Integrität des ausführenden Geräts der JVM zur Interpretierung übergeben werden kann (siehe T. Lindholm, F. Yellin .,The Java Virtual Machine Specification". Sun Microsystems; Addison-Wesley, 1996.

Ein zulässiges Bytecode-Programm ist durch gewisse Eigenschaften gekennzeichnet, die in T. Lindholm, F. Yellin: The Java Virtual Machine Specification. Sun Microsystems, 1996 als "structural constraints" beschrieben werden. Im wesentlichen beschreiben sie die Typsicherheit eines Bytecode-Programms, d. h. in einem Bytecode-Programm sind die Instruktionen so angeordnet, daß eine Instruktion stets solche Daten als Parameter bekommt, die ihrem Typ nach dem entsprechen, was die Instruktion erwartet. Diese Eigenschaften stellen sicher, daß das Bytecode-Programm unter Kontrolle der JVM bleibt und z. B. nicht direkt auf Rechnerressourcen zugreifen kann.

Der Prozeß der Bytecode-Verifikation ist durch zwei Gegebenheiten beschrieben erstens durch die Beschreibung der Eigenschaften, die er für ein Bytecode-Programm zusichern soll; zweitens durch die Implementierung des Prozesses (dabei handelt es sich um ein C-Programm). Beide Beschreibungen eignen sich nicht, um formale, maschinelle Berechnungen durchzuführen und damit die Sicherheit von Bytecode-Programmen formal zu garantieren.
Weiterhin ist ein mit Modelchecker bezeichnetes Werkzeug zur Untersuchung von Zustandsübergangssystemen bekannt (siehe K. L. Mc Millan .,Symbolic Model Cheking" Kluwer Academic Publishers, 1993).
Zustandsüberaangssysteme sind ein allgemeines Modell für Programme, die auf Rechnern oder anderen Maschinen (wie der JVM) ablaufen. Dabei betrachtet man die Zustände, die die Maschine während der Ausführung des Programmes einnimmt und welche Übergänge, d. h. Zustandsänderungen, dabei möglich sind.
Modelchecking ist eine Technik, mit der nur endliche Zustandsübergangssysteme untersucht werden können. Ein Modelchecker untersucht dafür den gesamten Zustandsraum des Systems, um Eisenschaften des Systems zu berechnen. Eine verbreitete Anwendung von Modelcheckern ist, ein System daraufhin zu prüfen, ob es gewisse Eigenschaften erfüllt. Der Modelchecker benotigt dafür als Eingabe eine Beschreibung des Systems, das untersucht werden soll sowie die Beschreibung von Eigenschaften, deren Gültigkeit im System festgestellt werden soll. In beiden Fällen handelt es sich um formale Beschreibungen, d. h. Beschreibungen, deren formale Semantik feststeht, und auf denen somit mathematische Berechnungen durchgeführt werden können.

Weiterhin beschreibt EP-A-0 685 799 ein mit Modelchecker bezeichnetes System zur Reduzierung des Zustandsraums von zu verifizierenden Zustandsübergangssystemen.

Im allgemeinen besitzen Software-Systeme auch Bytecode-Programme einen unendlichen Zustandsraum. Das bedeutet, daß das Verfahren des Modelchecking auf Bytecodeprogramme, die durch einen unendlichen Zustandsraum gekennzeichnet sind, nicht anwendbar ist.

Die technische Aufgabe ist auf ein Verfahren ausgerichtet, das eine höchstmögliche Sicherheit bei der Überprüfung von Sicherheitseigenschaften von Bytecode-Programmen gewährleistet.

Ausgangspunkt des erfindungsgemäßen Verfahrens ist der Sachverhalt, daß ein Bytecode-Programm eine Folge von Zeichen (Bytes) beinhaltet, wobei jedes Zeichen entweder als Instruktion oder als Datum (als Eingabe für die vorhergehende Instruktion) interpretiert wird. Ein Bytecode-Programm stellt somit eine Folge von Instruktionen und zugehörigen Daten dar. Ein Bytecode-Programm kann damit auch als Beschreibung eines Zustandsübergangssystems gedeutet werden, das Zustände der JVM transformiert. Die Zustände des Systems werden mit den Zuständen der JVM identifiziert und die Übergänge durch die Instruktionen des Programms festgelegt.

Erfindungsgemäß wird das oben beschriebene Zustandsübergangssystem (mit potentiell unendlichem Zustandsraum) durch eine geeignete Abbildung auf ein System mit einer endlichen Anzahl von Zuständen abgebildet. Diese Abstraktion auf eine endliche Anzahl von Zuständen wird dadurch erreicht, daß das System alle Informationen verwirft, die nicht benötigt werden, um festzustellen, ob das ursprüngliche Bytecode-Programm zulässig ist. Dies geschieht im wesentlichen dadurch, daß die konkreten Datenwerte durch reine Typinformationen ersetzt werden. Der Ersatz der konkreten Datenwerte durch reine Typinformationen ist möglich, weil die Zulässigkeit eines Bytecode-Programms nicht von konkreten Werten abhängt. Dabei bleiben aber alle Informationen, die notwendig sind, um die Zulässigkeit des Bytecode-Programms nachzuweisen, erhalten. Das resultierende Zustandsübergangssystem M besitzt eine endliche Menge von Zuständen und erfüllt damit die Grundbedingung für die Bearbeitung in einem Modelchecker. Das resultierende Zustandsübergangssystem M wird in den Modelchecker eingegeben.
In einem weiteren Schritt werden die Eigenschaften, die wie in T. Lindholm, F. Yellin: The Java Virtual Machine Specification. Sun Microsystems, 1996 als "structural constraints" beschrieben, ein zulässiges Bytecode-Programm kennzeichnen, in einer Logik formuliert, die der Modelchecker als Spezifikationssprache für Systemeigenschaften versteht. Das Ergebnis ist eine Menge von Formeln, die dem Modelchecker als Bedingungsmenge S als Vergleichsbasis für das Zustandsübergangssystem M übergeben werden. Aufgrund der o.g. Verfahrensweise ist gewährleistet, daß sich die Formeln nur auf Informationen beziehen, die sowohl im ursprünglichen, potentiell zustandsunendlichen System, als auch im daraus gewonnenen zustandsendlichen System vorhanden sind.

Der Modelchecker wird mit den eben beschriebenen Eingaben gestartet. Als Ergebnis liefert er die Information, ob das Zustandsübergangssystem M die in der Spezifikationssprache als Bedingungsmenge S in Form von Formeln beschriebenen Systemeigenschaften erfüllt. Dabei prüft der Modelchecker für jede Bedingung s der Bedingunasmenge S, ob sie vom Zustandsubergangssystem M des zu prüfenden Bytecode-Programms erfüllt ist. Wenn das der Fall ist, so ist sichergestellt, daß es sich bei dem ursprünglichen Bytecode-Programm um ein zulässiges Programm handelt, das die Sicherheit des ausführenden Rechners nicht bedroht. Das Bytecode-Programm wird zur weiteren Bearbeitung durch den Rechner freigegeben.
Erfüllen die im Zustandsübergangssystem M erfaßten Daten des zu prüfenden Bytecode-Programms jedoch nicht die in der Bedingungsmenge S in Form von Formeln beschriebenen Systemeigenschaften, die ein Bytecode-Programm kennzeichnen, ist grundsätzlich davon auszugehen, daß das geprüfte Bytecode-Programm die Sicherheit des Rechners bedrohen kann. Das geprüfte Bytecode-Programm wird nicht zur weiteren Bearbeitung freigegeben.

Das erfindungsgemäße Verfahren wird nachfolgend näher erläutert:
Zweck der "Bytecode-Verifikation" ist es, eine Klassendatei, also die Einheit, in der eine Java-Klassenbeschreibung zusammengefaßt ist, auf sichere Ausführbarkeit zu prüfen. Dazu werden die einzelnen Methoden der Klasse (hier Bytecode-Programme genannt) einzeln herausgelöst und der eigentlichen Bytecode-Verifikation unterzogen.
Eine Klassendatei enthält zusätzliche Daten, im wesentlichen Konstanten, auf die in den Bytecode-Programmen Bezug genommen wird. Für die folgenden Schritte ist es vorteilhaft, diese Referenzen in den Bytecode-Programmen aufzulösen und in die Programme einzuarbeiten, bevor mit der eigentlichen Prüfung begonnen wird.

Durch diese Vorverarbeitung erhält man eine Beschreibung der Bytecode-Programme, die sich nicht wesentlich von der ursprünglichen Form unterscheidet.

Die JVM, der Standard-Interpreter für Bytecode-Programme, ist durch eine abstrakte Maschine, d.h. eine Menge von Zuständen, beschrieben. Die Ausführung eines Bytecode-Programms entspricht der Interpretation von Bytecode-Instruktionen durch Zustandsübergänge. Eine Bytecode-Instruktion bewirkt dabei eine Transformation des aktuellen Zustands der JVM in einen neuen Zustand.

Ein Bytecode-Programm definiert also ein Zustandsübergangssystem, wobei der Zustandsraum durch die JVM festgelegt ist und die Übergänge durch die Instruktionen des Bytecode-Programms bestimmt werden. Dieses Zustandsübergangssystem besitzt einen potentiell unendlichen Zustandsraum. Deshalb ist es nicht geeignet, um von einem Modelchecker untersucht zu werden. Dazu muß es auf ein endliches Zustandsübergangssystem M abgebildet werden. Diese Abbildung wird im folgenden beschrieben.

Es wird nicht zunächst ein unendliches Übergangssystem konstruiert, das anschließend auf ein endliches abgebildet wird. Vielmehr wird aus dem Bytecode-Programm direkt ein endliches Zustandsübergangssystem M konstruiert, unter Verwendung von Regeln, die das Verhalten der Bytecode-Instruktionen beschreiben.
Die Funktionsweise eines Bytecode-Programms wird abgebildet auf ein endliches Zustandsübergangssystem M. Der Zustandsraum der JVM wird auf eine endliche Menge von Zuständen im Zustandsübergangssystem M abgebildet. Die Bytecode-Instruktionen bewirken dann Übergänge auf dieser endlichen Zustandsmenge, wobei ihre prinzipielle Wirkung erhalten bleibt. Das Zustandsübergangssystem M wird so beschrieben, daß diese Beschreibung als Eingabe für den Modelchecker dienen kann.

Die Eingabe für den Modelchecker besteht aus zwei Teilen:
1. Einer als Zustandsübergangssystem M bezeichneten Systembeschreibung, bestehend aus
   - einer Beschreibung des Zustandsraums, festgelegt durch die Zustandsvariablen und ihre Wertebereiche;
   - einer Vorschrift, die die Startzustände des Systems festlegt;
   - einer Übergangsrelation, die angibt, wie Zustände transformiert werden und unter welchen Bedingungen.
2. Einer Menge von Spezifikationen, die als Bedingungsmenge S bezeichnet werden und die die gewünschte Eigenschaften eines zulässigen Bytecode-Programms beschreiben. Diese Eigenschaften werden von dem Zustandsübergangssystem M verlangt, das durch das Bytecode-Programm beschrieben wird. So kann die Sicherheit bei der Ausführung des Bytecode-Programms garantiert werden. Diese Eigenschaften gelten im konkreten, unendlichen Zustandsübergangssystem (und damit im ursprünglichen Bytecode-Programm) dann, wenn sie im abstrakten, endlichen Zustandsübergangssystem M gelten. Der Modelchecker prüft, ob sie im abstrakten Zustandsübergangssystem M gelten. Falls dies der Fall ist. darf man schließen, daß die Eigenschaften auch vom konkreten System und damit im ursprünglichen Programm erfüllt werden.

Die Erzeugung der erforderlichen Daten wird im folgenden beschrieben:
Der Zustandsraum des Zustandsübergangssystems M ist aus folgenden Komponenten aufgebaut:
- Einem Befehlszähler.
- Einem Operanden-Stack, der die Parameter und Ergebnisse von Instruktionen aufnimmt.
- Einem Feld von lokalen Variablen.
- Einem Feld von globalen Variablen.
- Variablen für das Mitführen von buchhalterischen Informationen; auf diese kann zurückgegriffen werden, um Eigenschaften des Systems zu beschreiben, die mit den übrigen Komponenten nicht beschrieben werden können. Hierzu gehört u.a. ein
- Stack, der Informationen über die aktiven Subroutinen (Unterprogramme in einem Bytecode-Programm) enthält.
Die Werte von Variablen und Stackelementen stammen aus endlichen Wertebereichen. Der Befehlszähler kann eine endliche Zahl von Adresswerten annehmen. Der Operanden-Stack ist in der Höhe begrenzt. Insgesamt ist der Zustandsraum von M dadurch endlich.

Das Befehlsverzeichnis V enthält Beschreibungen aller Bytecode-Instruktionen, bestehend aus folgenden Informationen je Instruktion:
■ Die Bezeichnung der Instruktion (1 Byte).
■ Die Anzahl der Parameter in Bytes (Zeichen).
■ Eine Beschreibung der Wirkung auf Zustände der JVM.
■ Bedingungen, die ein Zustand der JVM erfüllen muß, damit die Instruktion angewendet werden kann (C1).
■ Bedingungen (C2), die die JVM erfüllen muß, weil die Instruktion im Programm vorkommt. Diese Bedingungen beziehen sich nicht notwendigerweise auf einzelne Zustände, sondern auch auf Ausführungspfade, d.h. Folgen von Zuständen.
Für die Bedingungen in V gilt folgende Eigenschaft (Al): Die Beschreibung der Bedingungen im Befehlsverzeichnis V verwendet nur solche Symbole, die bei der Beschreibung des Zustandsraums für M verwendet werden.

Ein Übersetzer erzeugt aus einem Bytecode-Programm ein endliches Zustandsübergangssystem. Das Bytecode-Programm liegt als Folge von Zeichen in der Eingabe vor, wobei ein einzelnes Zeichen als Instruktion oder Parameter einer Instruktion gedeutet werden kann. Das erste Zeichen wird als Instruktion gedeutet.

Ziel der Übersetzung ist die Konstruktion eines Zustandsübergangssystems M und einer Bedingungsmenge S. Der Übersetzungsprozeß ist wie folgt beschrieben:
1. Beginne mit einem initialen ("leeren") Übergangssystem M. Der Zustandsraum von M ist schon festgelegt durch die abstrakte Repräsentation des JVM-Zusrandsraums. Der Startzustand der JVM legt aber den Startzustand von M fest. Es sind jedoch noch keine Übergänge zwischen den Zuständen festgelegt.
2. Beginne mit einer leeren Bedingungsmenge S.
3. Solange Zeichen in der Eingabe vorhanden sind, führe folgende Schritte 4 bis S durch:
4. Lies ein Zeichen von der Eingabe; dieses bezeichnet die Programminstruktion B.
5. Schlage im Befehlsverzeichnis V nach, weiche Parameter B benötigt.
6. Lies die für B benötigten Parameter P von der Eingabe.
7. Übergebe (B,P) an die Abstraktionskomponente.
8. Übergebe (B,P) an die Bedingungskomponente.

Die Abstraktionskomponente erzeugt aus einer Instruktion B und zugehörigen Parametern P eine Menge von Zustandsübergängen. Das Zustandsübergangssystem M wird um diese Übergänge erweitert.
1. Schlage im Befehlsverzeichnis V nach, welche Wirkung B auf einem Zustand der JVM hat. Die Wirkung ist durch eine Regel beschrieben, so daß sich der Folgezustand der JVM aus einer Berechnung auf dem aktuellen Zustand ergibt. (Eine explizite Angabe der möglichen Übergänge ist nicht möglich, da die JVM über einen (praktisch) unendlichen Zustandsraum verfügt.)
2. Erzeuge daraus eine Beschreibung der Wirkung auf Zustände von M unter Berücksichtigung von P. Die Parameter P gehen in die Berechnung des Folgezustands ein. Wendet man eine JVM-Regel auf einen M-Zustand an, so erhält man eine Menge von M-Zuständen, die die möglichen Folgezustände der JVM repräsentieren. Es ergibt sich eine Menge von Folgezuständen für M, da nicht die konkreten Werte in P, sondern nur die für M relevanten Informationen betrachtet werden. Welcher JVM-Folgezustand bei Ausführung des Bytecode-Programms tatsächlich eingenommen wird, hängt von den konkreten Werten in P ab.
3. Diese Beschreibung legt eine Menge von Zustandsübergängen fest; erweitere M um diese Übergänge. Diese Übergänge können durch eine Regel beschrieben oder explizit angegeben werden. Letzteres ist möglich, da M nur eine endliche Zahl an Zuständen kennt und deshalb alle Übergänge durch Zustandspaare angegeben werden können. Letztlich lehnt sich die Beschreibung daran an, was der verwendete Modelchecker versteht. Aus praktischen Gründen wird man eine explizite Angabe aller Übergänge vermeiden, da die Datenmenge hierfür weit größer ist als bei der impliziten Angabe durch Regeln.

Die Bedingungskomponente erzeugt aus (B,P) eine Menge von Bedingungen, die vom Modelchecker letztlich zu prüfen sind. Diese Bedingungen können auf verschiedene Art repräsentiert werden, etwa durch temporallogische Formeln.
1. Schlage im Befehlsverzeichnis V nach, welche Bedingungen C1 an den aktuellen JVM-Zustand gestellt werden, damit B ausgeführt werden kann.
2. Übertrage C1 auf entsprechende M-Bedingungen. Laut (A1) sind die Bedingungen in V und die Zustandsbeschreibung für M so aufeinander abgestimmt, daß C1 auf M-Zuständen interpretiert werden kann. Die Übertragung auf M besteht im wesentlichen daraus, mittels P konkrete Instanzen von C1 zu erzeugen und in eine logische Formel zu übersetzen.
3. Schlage entsprechend die Bedingungen C2 nach, die für das gesamte System M durch die Verwendung von B entstehen.
4. Übertrage entsprechend C2 auf M.
5. Erweitere die Bedingungsmenge S um die Darstellungen für C1 und C2.

Die beschriebene Konstruktion des Zustandsübergangssystems M und der Bedingungsmenge S für ein zu prüfendes Bytecode-Programm läuft vollautomatisch ab. Das Befehlsverzeichnis V und seine Bestandteile wird, ebenso wie der Zustandsraum von M, einmal festgelegt für den bestimmten Zweck der "Bytecode-Verifikation", d.h. der Überprüfung von Sicherheitseigenschaften von Bytecode-Programmen.

Nachfolgend wird die Arbeitsweise des Modelcheckers erläutert.
Der Modelchecker prüft für jede Bedingung s aus der Bedingungsmenge S, ob sie vom Zustandsübergangssystem M erfüllt ist. Falls eine Bedingung s nicht erfüllt ist, erzeugt der Modelchecker Informationen, die zusammen mit der Kenntnis, für welche Instruktion s erzeugt wurde, verwendet werden kann, um zu analysieren, wie die Bedingungen an einen sicheren Ablauf der JVM durch das Bytecode-Programm verletzt werden können. Eine typische Ausgabe des Modelcheckers besteht aus der Angabe eines Ausführungspfades, d.h. einer Folge von M-Zuständen, der in einer Verletzung gewisser Bedingungen mündet.

Eine genaue Analyse des Ausführungspfades ist nicht notwendig. Ziel der Bytecode-Verifikation ist es lediglich festzustellen, ob eine Verletzung der Bedingungen durch das Programm möglich ist oder nicht. Informationen über das Wie können interessant sein, sind aber nicht notwendig, da lediglich gefordert ist, potentiell unsichere Programme abzuweisen. Dabei nimmt man in Kauf, auch sichere Programme abzuweisen, die zwar Bedingungen verletzen, deren genauere Analyse aber ergeben würde, daß sie in einer wirklichen Umgebung keinen Schaden anrichten könnten. Da solche Programme i. allg. nicht durch Compiler, sondern nur durch absichtsvolle Codierung entstehen, schrankt man sich nicht wesentlich ein.

Die Steuerung der Bytecode-Verifikation besteht in der Koordinierung der verschiedenen Komponenten. Eine Klassendatei wird der Bytecode-Verifikation unterzogen, indem
1. die Bytecode-Programme (Methoden) einzeln herausgelöst werden,
2. die Referenzen im Bytecode-Programm aufgelöst werden (Vorverarbeitung),
3. ein Zustandssystem und eine Bedingungsmenge konstruiert wird,
4. der Modelchecker mit dieser Eingabe gestartet wird;
5. bei Erfolg des Modelcheckers wird dies für das nächste Bytecode-Programm wiederholt, bei Mißerfolg wird gemeldet, daß die Bytecode-Verifikation für die untersuchte Klassendatei fehlgeschlagen ist.

Das erfindungsgemäße Verfahren läßt sich noch in einigen Punkten erweitern.
Von der Art der Abbildung eines Bytecode-Programms auf ein endliches Zustandssystem hängt es ab, welche Eigenschaften nachgewiesen werden können. Um etwa die Zulässigkeit eines Bytecode-Programms festzustellen, kann die oben skizzierte Abbildung benutzt werden. Durch Wahl einer anderen Abstraktions-Abbildung ist es möglich, andere Eigenschaften nachzuweisen. Eine interessante Eigenschaft wäre etwa die Beschränkung des Ressourcenverbrauchs eines Bytecode-Programms auf ein gewisses Maß.
Der Einsatz des erfindungsgemäßen Verfahrens erlaubt es, das sicherheitskritische Konzept der Bytecode-Verifikation auf einer formalen Grundlage zu implementieren. Dadurch erreicht man die höchstmögliche Sicherheit für diesen Aspekt der Java-Technologie. Man kann erwarten, daß sich die Technik darüberhinaus auch zum Nachweis weitergehender Eigenschaften von Applets einsetzen läßt, so daß ein größerer Einsatzbereich interessant wird.

Insbesondere im Umfeld Java-fähiger Smartcards (wobei sich Java-fähig darauf bezieht, Bytecode-Programme ausführen zu können), wo die Sicherheitsanforderungen extrem hoch sind, ist diese Technik interessant. Java-fähige Smartcards erlauben es, Programme zu laden und auszuführen. und zwar auch dann, wenn sie sich bereits im Besitz des Endkunden befindet (dies ist mit herkömmlichen Smartcards nicht oder nur eingeschränkt möglich).
Dabei ist es von größter Wichtigkeit, daß nur solche Programme geladen und ausgeführt werden, die die Integrität der Karte und der darauf gespeicherten Daten nicht verletzen, denn der Mißbrauch solcher Daten kann erheblichen persönlichen oder finanziellen Schaden anrichten.
Durch die beschriebene Technik kann die Sicherheit von Bytecode-Programmen garantiert und durch zusätzliche Erweiterungen eine gewisse Funktionalität zugesichert werden. Damit kann das Vertrauen in Anwendungen erhöht werden, die auf sicherheitskritischen Plattformen wie Smartcards ablaufen sollen.

### Bezugszeichenliste

- JVM: Interpreter für Java-Bytecode-Programme (Java Virtual Machine)
- M: endliches Zustandsübergangssystem
- S: Bedingungsmenge
- s: Bedingung von S
- V: Befehlsverzeichnis für Bytecode-Instruktionen
- C1: Bedingungen, die ein Zustand der JVM erfüllen muß
- C2: Bedingungen, die die JVM erfüllen muß
- A1: Eigenschaft, die für Bedingungen in V gilt
- B: Programminstruktion
- P: Parameter für B

## Patentansprüche

1. Verfahren zur Prüfung von Java-Bytecode-Programmen auf Sicherheitseigenschaften nach dem Prinzip der Bytecode-Verifikation,
**dadurch gekennzeichnet, daß**
a) die Funktionsweise des zu prüfenden Bytecode-Programms unter Verwendung eines Algorithmus, der das Verhalten der Bytecode-Instruktionen beschreibt, von einem potentiell unendlichen Zustandsübergangssystem auf ein endliches Zustandsübergangssystem (M) und der Zustandsraum des Interpreters (JVM) auf eine endliche Menge von Zuständen im endlichen Zustandsübergangssystem (M) abgebildet werden, wobei alle nicht für die Zulässigkeit des zu prüfenden Bytecode-Programms erforderlichen Informationen entfallen, so daß das daraus resultierende endliche Zustandsübergangssystem (M) ausschließlich Typinformationen zum Nachweis der Zulässigkeit des Bytecode-Programms enthält, welche in einen Modelchecker eingegeben werden, daß
b) die Eigenschaften, die ein zulässiges Bytecode -Programm kennzeichnen, in einer Logik in Form von Formeln erfaßt und als Bedingungsmenge (S) in den Modelchecker eingegeben werden, wobei der Modelchecker jede einzelne Bedingung (s) der Bedineungsmenge (S) als Spezifikationssprache für Systemeigenschaften von Bytecode-Programmen interpretiert, und daß
der Modelchecker für jede Bedingung (s) der Bedingungsmenge (S) prüft, ob sie vom Zustandsübergangssystem (M) erfüllt ist, und daß das überprüfte Bytecode-Programm automatisch zur weiteren Verarbeitung freigegeben wird, wenn das Zustandsübergangssystem (M) alle Bedingungen (s) der Bedingungsmenge (S) erfüllt.

## Claims

1. Method for checking Java byte code programs for security characteristics according to the principle of byte code verification,
**characterized in that**
a) using an algorithm describing the behaviour of the byte code instructions, the mode of operation of the byte code program being checked is mapped from a potentially infinite state transition system to a finite state transition system (M) and the state space of the interpreter (JVM) is mapped to a finite set of states in the finite state transition system (M), wherein all information not required for the admissibility of the byte code program being checked is dropped, with the result that the therefrom resulting finite state transition system (M) contains exclusively type information for demonstrating the admissibility of the byte code program, said information being entered into a model checker;
b) the characteristics which characterize an admissible byte code program are recorded in a logic in the form of formulas and are entered into the model checker as a set of conditions (S), the model checker interpreting each individual condition (s) of the set of conditions (S) as a specification language for system characteristics of byte code programs, and
the model checker checks for each condition (s) of the set of conditions (S) whether it is fulfilled by the state transition system (M), wherein the byte code program being checked is automatically released for further processing if the state transition system (M) fulfils all of the conditions (s) of the set of conditions (S).

## Revendications

1. Procédé destiné à vérifier les propriétés de sécurité des programmes de bytecode Java selon le principe de la vérification du bytecode,
**caractérisé en ce que**
a) le mode de fonctionnement du programme de bytecode à vérifier grâce à l'utilisation d'un algorithme décrivant le comportement des instructions de bytecode est reproduit à partir d'un système de transition d'états potentiellement infini sur un système de transition d'états fini (M) et l'espace d'état de l'interpréteur (JVM) est reproduit sur un ensemble fini d'états dans le système de transition d'états, toutes les informations nécessaires à l'admissibilité du programme de bytecode à vérifier étant supprimées, de sorte que le système de transition d'états (M) fini en résultant contienne exclusivement des informations de type fournissant la preuve de l'admissibilité du programme de bytecode, qui sont introduites dans un model-checker,
b) les propriétés caractérisant un programme de bytecode admissible sont saisies dans une logique sous forme de formules avant d'être introduites en tant qu'ensemble de conditions (S) dans le model-checker, le model-checker interprétant chaque condition (s) de l'ensemble de conditions (S) comme langage de spécification pour les propriétés de système des programmes de bytecode,
le model-checker vérifie pour chaque condition (s) de l'ensemble de conditions (S) si elle est satisfaite par le système de transition d'états (M) et le programme de bytecode vérifié est automatiquement débloqué pour le traitement ultérieur dans les cas où le système de transition d'états (M) remplit toutes les conditions (s) de l'ensemble de conditions (S).
